(19) Europäisches Patentamt
European Patent Office
Office européen des brevets

(11) Veröffentlichungsnummer : **0 050 263**
**B1**

(12) **EUROPÄISCHE PATENTSCHRIFT**

(45) Veröffentlichungstag der Patentschrift : **03.08.83**

(51) Int. Cl.³ : **C 09 B 57/06**, D 06 P 1/42, D 21 H 3/80

(21) Anmeldenummer : **81107956.5**

(22) Anmeldetag : **06.10.81**

# (54) Kationische Farbstoffe, ihre Herstellung und Verwendung zum Färben kationisch färbbarer Fasern und Papier.

(30) Priorität : **16.10.80 DE 3039116**

(43) Veröffentlichungstag der Anmeldung : **28.04.82 Patentblatt 82/17**

(45) Bekanntmachung des Hinweises auf die Patenterteilung : **03.08.83 Patentblatt 83/31**

(84) Benannte Vertragsstaaten : **CH DE FR GB LI**

(56) Entgegenhaltungen :
**CH A 8 379**
**DE A 1 569 660**
**DE B 1 190 126**
**DE B 2 042 385**

(73) Patentinhaber : **BAYER AG**
**Zentralbereich Patente, Marken und Lizenzen**
**D-5090 Leverkusen 1, Bayerwerk (DE)**

(72) Erfinder : **Brack, Alfred, Dr.**
**Auf dem Krahwinkel 7**
**D-5068 Odenthal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 050 263 B1

# Kationische Farbstoffe, ihre Herstellung und Verwendung zum Färben kationisch färbbarer Fasern und Papier

Gegenstand der vorliegenden Erfindung sind neue kationische Farbstoffe der Formel

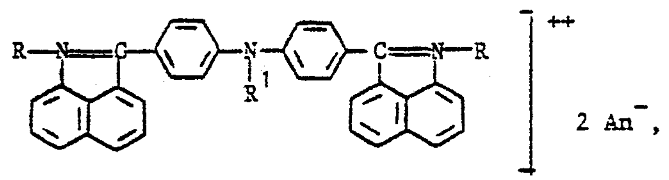

(I)

worin

R für Wasserstoff oder einen gegebenenfalls durch nichtionische Reste substituierten Alkylrest mit maximal 8 C-Atomen,

$R^1$ für Wasserstoff oder einen gegebenenfalls durch nichtionische Reste substituierten Alkylrest mit maximal 4 C-Atomen und

$An^-$ für ein Anion stehen,

und worin die Benzol- und Naphthalinringe in der Farbstoffchemie übliche, nichtionische Reste enthalten können, sowie ein Verfahren zur Herstellung dieser Farbstoffe und ihre Verwendung zum Färben von Papiermassen, von kationisch färbbaren Fasern aus Polymerisaten und Mischpolymerisaten des Acrylnitrils und des Dicyanethylens sowie von sauer modifizierten Fasern aus Polyamiden und Polyestern.

Als nichtionische Substituenten kommen im Rahmen dieser Erfindung besonders Halogenatome, Nitril-, Carbonsäure-ester- und -amidgruppen, Hydroxy-, Acyloxy-, Alkoxy-, Aralkoxy-, Aryloxygruppen und die analogen Mercaptogruppen, Aminogruppen und durch Alkyl-, Aralkyl-, Aryl-, Cycloalkyl- oder Acylgruppen mono- oder disubstituierte Aminogruppen, Acyl- und Sulfonylreste, Sulfonamidgruppen und deren Abwandlungsprodukte wie die in DE-A-21 28 326 beschriebenen Sulfamidingruppen und — an Ringen — Nitro- und Alkylgruppen in Betracht, aber auch Carboxylgruppen, die im neutralen und sauren pH-Bereich sehr wenig dissoziieren und den kationischen Charakter der Farbstoffe deshalb nicht beeinflussen.

Hervorzuheben sind Farbstoffe der Formel

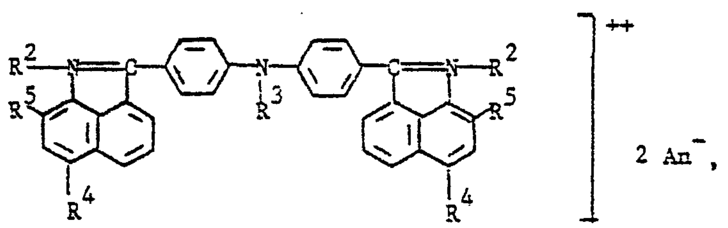

(II)

worin

$R^2$ für Wasserstoff, $C_1$- bis $C_4$-Alkyl, das durch Cyan, Hydroxy, $C_1$- bis $C_4$-Alkoxy, Chlor, $C_1$- bis $C_4$-Alkoxycarbonyl, Aminocarbonyl oder Mono- oder Di-$C_1$-bis-$C_4$-alkylaminocarbonyl substituiert sein kann,

$R^3$ für Wasserstoff oder $C_1$- bis $C_4$-Alkyl und

$R^4$ für Wasserstoff, Chlor, Brom, $C_1$- bis $C_4$-Alkylcarbonylamino, Benzoylamino, Methylsulfonylamino, Phenylsulfonylamino, $C_1$- bis $C_4$-Alkylsulfonyl, Phenylsulfonyl, Aminosulfonyl, Mono- oder Di-$C_1$- bis -$C_4$-alkyl- oder -phenylaminosulfonyl, $C_1$- bis $C_4$-Alkylmercapto, wobei der Alkylrest durch Carboxyl, $C_1$- bis $C_4$-Alkoxycarbonyl, Hydroxy, Methoxy oder Ethoxysubstituiert sein kann, Phenylmercapto, Carboxyl, Cyan oder einen Rest der Formeln

$-SO_2-N=CH-N(R^6)(R^7)$ oder 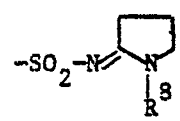

$R^5$ für Wasserstoff, Chlor oder Brom,

$R^6$ und $R^7$ für $C_1$- bis $C_4$-Alkyl, Phenyl, Benzyl oder gemeinsam mit dem Stickstoff für einen Pyrrolidin-, Piperidin- oder Morpholinring,

$R^8$ für Wasserstoff, $C_1$- bis $C_4$-Alkyl, Phenyl oder Benzyl und

An⁻ für ein Anion stehen, und worin die genannten Phenylreste durch $C_1$- bis $C_4$-Alkyl, Chlor, Brom, Hydroxy oder $C_1$- bis $C_4$-Alkoxy substituiert sein können.

Von den Farbstoffen der Formel II sind Farbstoffe bevorzugt, worin

$R^2$ für Wasserstoff, Methyl, Ethyl, Propyl, Butyl, β-Cyanethyl, β-Hydroxyethyl, β-Alkoxyethyl, β-Chlorethyl, Methoxycarbonylethyl, Ethoxycarbonylethyl, Methoxycarbonylmethyl oder Ethoxycarbonylmethyl,

$R^3$ für Wasserstoff, Methyl oder Ethyl und

$R^4$ für Wasserstoff, Chlor, Brom, Acetamino, Methylsulfonylamino, Phenylsulfonylamino, $C_1$- bis $C_4$-Alkylsulfonyl, Phenylsulfonyl, Aminosulfonyl, Mono- oder Di-$C_1$- bis -$C_4$-alkyl- oder -phenylaminosulfonyl, $C_1$- bis $C_4$-Alkylmercapto, wobei der Alkylrest durch Carboxyl, Methoxycarbonyl, Ethoxycarbonyl, Hydroxy, Methoxy oder Ethoxy substituiert sein kann, Phenylmercapto oder Cyan,

$R^5$ für Wasserstoff,

$R^6$ und $R^7$ für Methyl oder Phenyl,

$R^8$ für Wasserstoff oder Methyl und

$An^-$ für ein Anion stehen, und

worin die genannten Phenylreste durch Methyl oder Chlor substituiert sein können.

Davon sind bevorzugt die Farbstoffe, in denen

$R^3$ für Wasserstoff steht,

und insbesondere bevorzugt die Farbstoffe der Formel

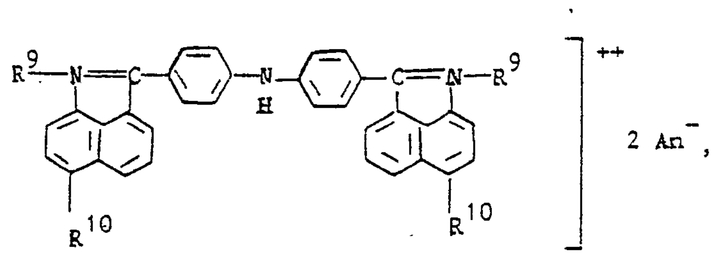

(III)

worin

$R^9$ für Methyl, Ethyl oder β-Cyanethyl und

$R^{10}$ für Wasserstoff, Chlor oder Brom stehen.

Die neuen Farbstoffe werden hergestellt durch Kondensation eines Naphtholactamderivates der Formel

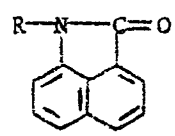

(IV)

worin

R die eingangs angegebenen Bedeutung hat und

der Naphthalinring in der erläuterten Weise substituiert sein kann, mit einem Diphenylaminderivat der Formel

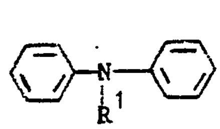

(V)

worin

$R^1$ die eingangs angegebene Bedeutung hat und

die Benzolringe in der erläuterten Weise substituiert sein können, wobei aber die p-Positionen beide unsubstituiert sind, in an sich bekannter Weise, wobei man auf 1 mol V mindestens 2 mol IV einsetzt. Am zweckmäßigsten wird diese Kondensation in überschüssigem Phosphoroxychlorid unter Zusatz von Phosphorpentoxid bei Temperaturen zwischen etwa 100 °C und dem Siedepunkt der Mischung ausgeführt.

Die neuen Farbstoffe besitzen eine sehr hohe Celluloseaffinität, die auch das Färben ligninfreier, gebleichter Zellstoffe unter nahezu quantitativer Farbstoffaufnahme ermöglicht. Die anfallenden Abwässer enthalten demzufolge keinen oder fast keinen Farbstoff. Die Färbungen zeichnen sich durch gute Lichtechtheiten aus.

Die Farbstoffe eignen sich auch zum Färben, Bedrucken und Massefärben von Materialien, die überwiegend oder vollständig aus Polyacrylnitril oder seinen Mischpolymerisaten mit anderen Vinylmonomeren, wie Vinylidencyanid, Vinylidenchlorid, Vinylchlorid, Vinylacetat, Vinylalkohol, Acryl- oder Methacrylester, bestehen, oder aus sauer modifizierten Polyestern oder Polyamiden. Die erhaltenen Färbungen und Drucke zeichnen sich durch hohe Allgemeinechtheiten, insbesondere durch hohe Licht-, Naß- und Schweißechtheiten, durch eine hohe Affinität zur Faser und durch eine hohe pH-Stabilität aus.

Die in den nachfolgenden Beispielen angegebenen Teile sind Gewichtsteile.

## Beispiel 1

197 Teile N-Ethyl-naphtholactam-(1,8), 84,5 Teile Diphenylamin, 800 Teile Phosphoroxychlorid und 200 Teile Phosphorpentoxid werden 10 h auf 100-105 °C erhitzt. Nach dem Erkalten wird die Lösung in 7 500 Teile Wasser gegossen. Durch Zugabe der erforderlichen Menge Natron- oder Kalilauge wird der pH-Wert auf etwa 4 eingestellt. Der entstandene Farbstoff der Formel

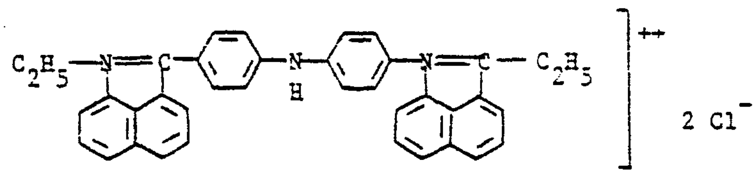

scheidet sich in kristalliner Form aus. Die Ausbeute ist annähernd quantitativ. Der Farbstoff kann gewünschtenfalls leicht durch Umkristallisieren aus Wasser gereinigt werden. Er färbt Papiermassen mit guter Lichtechtheit stark rotstichig blau. Das Abwasser wird kaum angefärbt.

Verwendet man anstelle des N-Ethyl-naphtholactams 280 Teile 4-Brom-N-ethyl-naphtholactam-(1,8), so erhält man bei im übrigen unveränderter Arbeitsweise mit ebenfalls praktisch quantitativer Ausbeute den Farbstoff der Formel

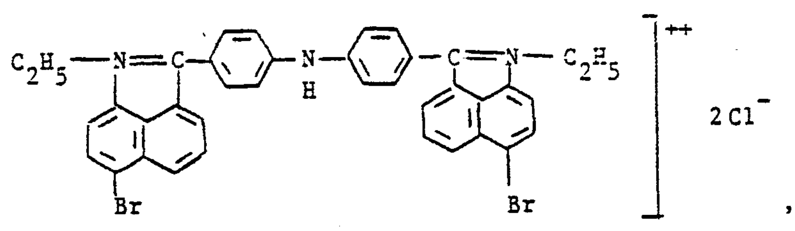

der Papiermassen mit guter Lichtechtheit klar blau färbt. Das Abwasser bleibt ungefärbt.

## Beispiel 2

331 Teile des Naphtholactamderivates der Formel

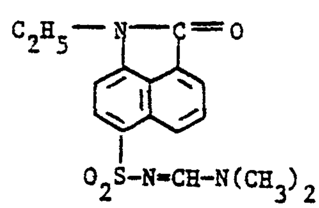

und 98 Teile N-Ethyl-diphenylamin werden mit 700 Teilen Phosphoroxychlorid und 100 Teilen Phosphorpentoxid 15 h auf etwa 105 °C erhitzt. Die Aufarbeitung erfolgt nach den Angaben des Beispiels 1. Man erhält mit etwa 95 % Ausbeute den Farbstoff der Formel

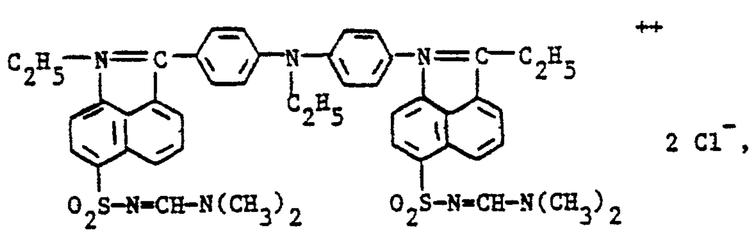

der Papiermassen mit guter Lichtechtheit blaufärbt.

Verwendet man als Naphtholactamderivat eine der folgenden Verbindungen in jeweils äquivalenter Menge, so erhält man bei im übrigen unveränderter Arbeitsweise ähnliche Farbstoffe :

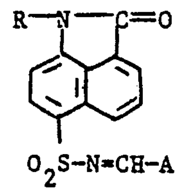

| Beispiel | R | A |
|---|---|---|
| 3 | $CH_3$ | $N(CH_3)_2$ |
| 4 | $CH_2CH_2CN$ | " |
| 5 | $C_2H_5$ | 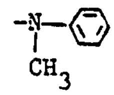 |
| 6 | $C_2H_5$ | 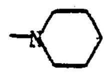 |
| 7 | " | 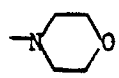 |
| 8 | " | 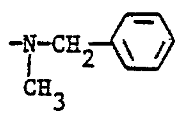 |

Arbeitet man nach dem Verfahren des Beispiels 1 unter Einsatz von je 1 mol eines der folgenden Naphtholactamderivate, so erhält man die entsprechenden Farbstoffe der Formel I, die lichtechte Papierfärbungen ergeben und die annähernd farbstoff-freie Abwässer liefern :

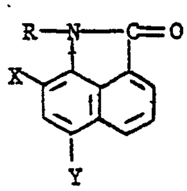

| Beispiel | R | Y | X | Farbton |
|---|---|---|---|---|
| 9 | H | H | H | blauviolett |
| 10 | $CH_3$ | " | " | " |
| 11 | $CH_2CH_2CN$ | " | " | stark rotst. blau |
| 12 | $CH_2CH_2OH$ | " | " | sehr stark rotst. blau |
| 13 | $CH_2COOCH_3$ | " | " | rotst. blau |
| 14 | $CH_2CH_2COOC_2H_5$ | " | " | " " |
| 15 | $n-C_3H_7$ | " | " | blauviolett |
| 16 | $n-C_4H_9$ | " | " | " |
| 17 | $i-C_5H_{11}$ | " | " | " |
| 18 | $CH_3$ | Cl | " | rotst. blau |
| 19 | " | " | Cl | blau |
| 20 | $C_2H_5$ | " | H | rotst. blau |
| 21 | " | $-SO_2N(CH_3)_2$ | " | blau |

(Fortsetzung)

| Beispiel | R | Y | X | Farbton |
|---|---|---|---|---|
| 22 | $C_2H_5$ | Br | Br | blau |
| 23 | $CH_3$ | CN | H | rotst. blau |
| 24 | $C_2H_5$ | $SCH_2COOH$ | " | blau |
| 25 | " | $SCH_2CH_2OH$ | " | " |
| 26 | " | 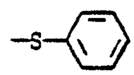 | " | grünst. blau |
| 27 | " | 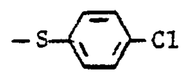 | " | " " |
| 28 | " | 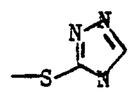 | " | " " |
| 29 | " | $CH_3SO_2-$ | " | blau |
| 30 | " | 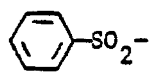 | " | " |
| 31 | " | $OCH_3$ | " | blauviolett |
| 32 | " | $NHCOCH_3$ | " | blau |
| 33 | " | $N(CH_3)_2$ | " | grünst. blau |
| 34 | " | COOH | " | rotst. blau |
| 35 | $CH_3OCH_2CH_2-$ | Br | " | " " |
| 36 | " | " | Br | blau |
| 37 | $CH_2=CH-CH_2-$ | " | H | " |
| 38 | $C_2H_5$ | $SO_2-N=CH-N(CH_3)_2$ | " | " |
| 39 | " | 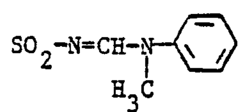 | " | " |
| 40 | " | 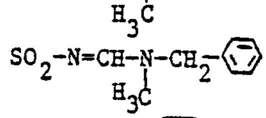 | " | " |
| 41 | " | 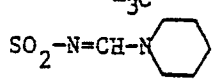 | " | " |
| 42 | " | 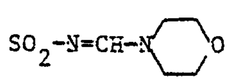 | " | " |

Beispiel 43

0,5 Teile des Farbstoffes der Formel

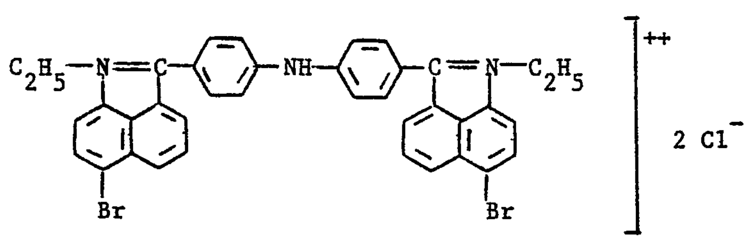

werden in 100 Teilen einer 28 %igen Lösung eines sauer modifizierten Polyacrylnitrils in Dimethylformamid gelöst. Die homogenisierte Lösung wird sodann nach einem in der Technik üblichen und allgemein

bekannten Trockenspinn-Verfahren versponnen. Man erhält intensiv rotstichig blaue Fäden, die sich durch ausgezeichnete Echtheiten — insbesondere Licht-, Reib-, Naß- und Dämpfechtheit — auszeichnen.

Führt man die Faserherstellung nach einem der üblichen Naßspinn-Verfahren durch, so erhält man ein gleich gutes Ergebnis. Die Fäll- und Verstreckbäder werden praktisch nicht eingefärbt, weil der Farbstoff nicht ausblutet.

Anstelle des Farbstoffchlorids kann man auch die äquivalente Menge des Acetats oder Lactats einsetzen. Für noch tiefere Färbungen sind diese Salze wegen ihrer leichteren Löslichkeit vorzuziehen.

**Ansprüche**

1. Kationische Farbstoffe der allgemeinen Formel

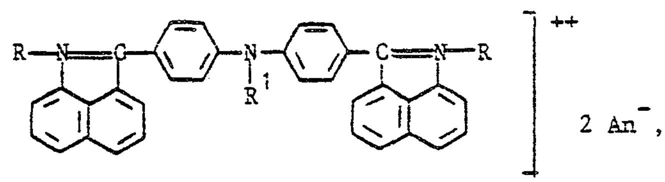

worin

R für Wasserstoff oder einen gegebenenfalls durch nichtionische Reste substituierten Alkylrest mit maximal 8 C-Atomen,

$R^1$ für Wasserstoff oder einen gegebenenfalls durch nichtionische Reste substituierten Alkylrest mit maximal 4 C-Atomen und

$An^-$ für ein Anion stehen,

und worin die Benzol- und Naphthalinringe in der Farbstoffchemie übliche, nichtionische Reste enthalten können.

2. Kationische Farbstoffe der allgemeinen Formel

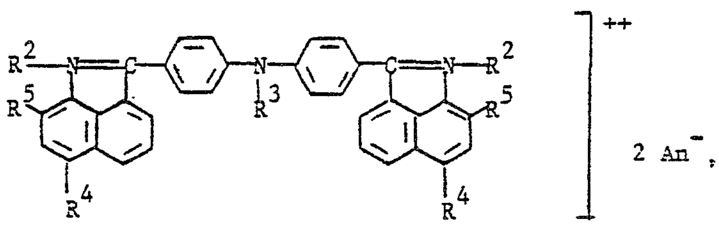

worin

$R^2$ für Wasserstoff, $C_1$- bis $C_4$-Alkyl, das durch Cyan, Hydroxy, $C_1$- bis $C_4$-Alkoxy, Chlor, $C_1$- bis $C_4$-Alkoxycarbonyl, Aminocarbonyl oder Mono- oder Di-$C_1$- bis $C_4$-alkylaminocarbonyl substituiert sein kann,

$R^3$ für Wasserstoff oder $C_1$- bis $C_4$-Alkyl und

$R^4$ für Wasserstoff, Chlor, Brom, $C_1$- bis $C_4$-Alkylcarbonylamino, Benzoylamino, Methylsulfonylamino, Phenylsulfonylamino, $C_1$- bis $C_4$-Alkylsulfonyl, Phenylsulfonyl, Aminosulfonyl, Mono- oder Di-$C_1$- bis $C_4$-alkyl- oder -phenylaminosulfonyl, $C_1$- bis $C_4$-Alkylmercapto, wobei der Alkylrest durch Carboxyl, $C_1$- bis $C_4$-Alkoxycarbonyl, Hydroxy, Methoxy oder Ethoxy substituiert sein kann, Phenylmercapto, Carboxyl, Cyan oder einen Rest der Formeln

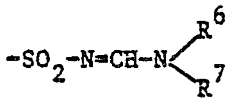

oder

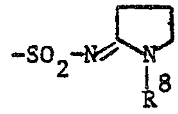

$R^5$ für Wasserstoff, Chlor oder Brom,

$R^6$ und $R^7$ für $C_1$- bis $C_4$-Alkyl, Phenyl, Benzyl oder gemeinsam mit dem Stickstoff für einen Pyrrolidin, Piperidin- oder Morpholinring,

$R^8$ für Wasserstoff, $C_1$- bis $C_4$-Alkyl, Phenyl oder Benzyl und

An⁻ für ein Anion stehen, und
worin die genannten Phenylreste durch $C_1$- bis $C_4$-Alkyl, Chlor, Brom Hydroxy oder $C_1$- bis $C_4$-Alkoxy substituiert sein können.

3. Kationische Farbstoffe gemäß Anspruch 2, worin
$R^2$ für Wasserstoff, Methyl, Ethyl, Propyl, Butyl, β-Cyanethyl, β-Hydroxyethyl, β-Alkoxyethyl, β-Chlorethyl, Methoxycarbonylethyl, Ethoxycarbonylethyl, Methoxycarbonylmethyl oder Ethoxycarbonylmethyl,
$R^3$ für Wasserstoff, Methyl oder Ethyl und
$R^4$ für Wasserstoff, Chlor, Brom, Acetamino, Methylsulfonylamino, Phenylsulfonylamino, $C_1$- bis $C_4$-Alkylsulfonyl, Phenylsulfonyl, Aminosulfonyl, Mono- oder Di-$C_1$- bis $C_4$-alkyl- oder -phenylaminosulfonyl, $C_1$- bis $C_4$-Alkylmercapto, wobei der Alkylrest durch Carboxyl, Methoxycarbonyl, Ethoxycarbonyl, Hydroxy, Methoxy oder Ethoxy substituiert sein kann, Phenylmercapto oder Cyan,
$R^5$ für Wasserstoff,
$R^6$ und $R^7$ für Methyl oder Phenyl,
$R^8$ für Wasserstoff oder Methyl und
$An^-$ für ein Anion stehen, und
worin die genannten Phenylreste durch Methyl oder Chlor substituiert sein können.

4. Kationische Farbstoffe gemäß Anspruch 3, worin
$R^3$ für Wasserstoff steht.

5. Kationische Farbstoffe der allgemeinen Formel

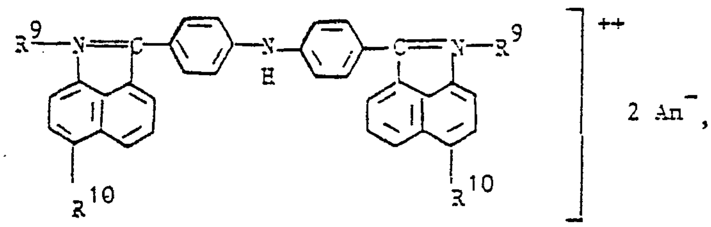

worin
$R^9$ für Methyl, Ethyl oder β-Cyanethyl und
$R^{10}$ für Wasserstoff, Chlor oder Brom stehen.

6. Verfahren zur Herstellung kationischer Farbstoffe gemäß Anspruch 1, dadurch gekennzeichnet, daß man mindestens 2 Äquivalente einer Verbindung der Formel

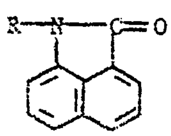

worin
R die in Anspruch 1 angegebene Bedeutung hat und worin der Naphthalinring in der in Anspruch 1 erläuterten Weise substituiert sein kann, mit einem Äquivalent einer Verbindung der Formel

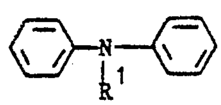

worin
$R^1$ die in Anspruch 1 angegebene Bedeutung besitzt,
die Benzolringe in der in Anspruch 1 erläuterten Weise substituiert sein können, wobei die p-Positionen beide unsubstituiert sind, durch Erhitzen mit Phosphoroxychlorid unter Zusatz von Phosphorpentoxid auf Temperaturen oberhalb von 90 °C, vorzugsweise 100 °C bis zum Siedepunkt der Mischung, kondensiert.

7. Verwendung von Farbstoffen der Ansprüche 1-5 zum Färben von Papiermassen, von kationisch färbbaren Fasern aus Polymerisaten und Mischpolymerisaten des Acrylnitrils und des Dicyanethylens sowie von sauer modifizierten Fasern aus Polyamiden und Polyestern.

**Claims**

1. Cationic dyestuffs of the general formula

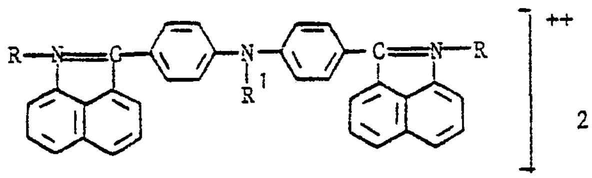

2 $An^-$,

wherein

R represents hydrogen or an alkyl radical which has a maximum of 8 carbon atoms and is optionally substituted by non-ionic radicals,

$R^1$ represents hydrogen or an alkyl radical which has a maximum of 4 carbon atoms and is optionally substituted by non-ionic radicals, and

$An^-$ represents an anion,

and wherein the benzene rings and naphthalene rings can contain non-ionic radicals which are customary in dyestuff chemistry.

2. Cationic dyestuffs of the general formula

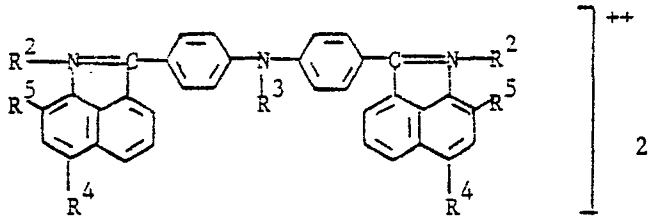

2 $An^-$,

wherein

$R^2$ represents hydrogen, or $C_1$- to $C_4$-alkyl which can be substituted by cyano, hydroxyl, $C_1$- to $C_4$-alkoxy, chlorine, $C_1$- to $C_4$-alkoxycarbonyl, aminocarbonyl or mono- or di-$C_1$- to $C_4$-alkylaminocarbonyl,

$R^3$ represents hydrogen or $C_1$- to $C_4$-alkyl and

$R^4$ represents hydrogen, chlorine, bromine, $C_1$- to $C_4$-alkylcarbonylamino, benzoylamino, methylsulphonylamino, phenylsulphonylamino, $C_1$- to $C_4$-alkylsulphonyl, phenylsulphonyl, aminosulphonyl, mono- or di-$C_1$- to $C_4$-alkyl- or -phenylaminosulphonyl, $C_1$- to $C_4$-alkylmercapto, wherein the alkyl radical can be substituted by carboxyl, $C_1$- to $C_4$-alkoxycarbonyl, hydroxy, methoxy or ethoxy, or represents phenylmercapto, carboxyl, cyano or a radical of a radical of the formulae

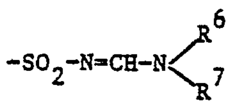

or

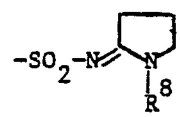

$R^5$ represents hydrogen, chlorine or bromine,

$R^6$ and $R^7$ represent $C_1$- to $C_4$-alkyl, phenyl or benzyl, or together with the nitrogen atom represent a pyrrolidine, piperidine or morpholine ring,

$R^8$ represent hydrogen, $C_1$- to $C_4$-alkyl, phenyl or benzyl and

$An^-$ represents an anion, and

wherein the stated phenyl radicals can be substituted by $C_1$- to $C_4$-alkyl, chlorine, bromine, hydroxy or $C_1$- to $C_4$-alkoxy.

3. Cationic dyestuffs according to Claim 1, wherein

$R^2$ represents hydrogen, methyl, ethyl, propyl, butyl, β-cyanoethyl, β-hydroxyethyl, β-alkoxyethyl, β-chloroethyl, methoxycarbonylethyl, ethoxycarbonylethyl, methoxycarbonylmethyl or ethoxycarbonylmethyl,

$R^3$ represents hydrogen, methyl of ethyl and

$R^4$ represents hydrogen, chlorine, bromine, acetamino, methylsulphonylamino, phenylsulphonylamino, $C_1$- to $C_4$-alkylsulphonyl, phenylsulphonyl, aminosulphonyl, mono- or di-$C_1$- to $C_4$-alkyl- or -phenylaminosulphonyl, $C_1$- to $C_4$-alkylmercapto, wherein the alkyl radical can be substituted by carboxyl, methoxycarbonyl, ethoxycarbonyl, hydroxy, methoxy or ethoxy, or represents phenylmercapto or cyano,

$R^5$ represents hydrogen,

$R^6$ and $R^7$ represent methyl of phenyl,

$R^8$ represents hydrogen or methyl and

$An^-$ represents an anion, and

wherein the stated phenyl radicals can be substituted by methyl or chlorine.

4. Cationic dyestuffs according to Claim 3, wherein

$R^3$ represents hydrogen.

5. Cationic dyestuffs of the general formula

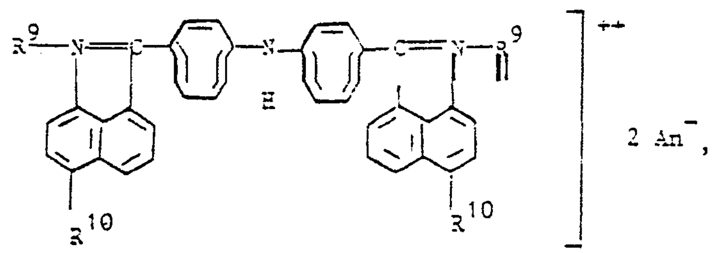

wherein

$R^9$ represents methyl, ethyl or β-cyanoethyl and

$R^{10}$ represents hydrogen, chlorine or bromine.

6. Process for the preparation of cationic dyestuffs according to Claim 1, characterised in that at least two equivalents of a compound of the formula

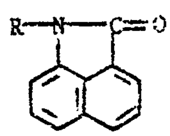

wherein

R has the meaning given in Claim 1, and wherein the naphthalene ring can be substituted in the manner described in Claim 1, are condensed with one equivalent of a compound of the formula

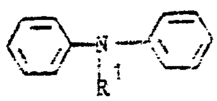

wherein

$R^1$ has the meaning given in Claim 1 and the benzene rings can be substituted in the manner described in Claim 1, the p-positions both being unsubstituted, by heating with phosphorus oxychloride, with the addition of phosphorus pentoxide, to temperatures above 90 °C, preferably 100 °C to the boiling point of the mixture.

7. Use of dyestuffs of Claims 1-5, for dyeing paper pulps, cationically dyeable fibres consisting of polymers and copolymers of acrylonitrile and of dicyanoethylene, and acid-modified fibres consisting of polyamides and polyesters.

**Revendications**

1. Colorants cationiques de formule générale

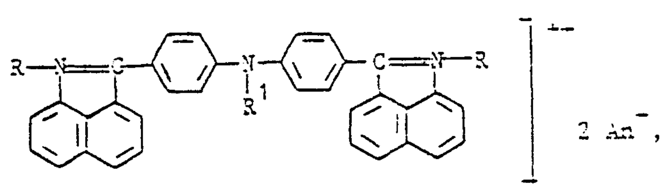

dans laquelle

R représente l'hydrogène ou un reste alkyle éventuellement substitué par des restes non ioniques et contenant au maximum 8 atomes de carbone,

$R^1$ représente l'hydrogène ou un reste alkyle éventuellement substitué par des restes non ioniques et contenant au maximum 4 atomes de carbone, et

$An^-$ représente un anion,

les noyaux benzéniques et naphtaléniques pouvant contenir des restes non ioniques usuels dans la chimie des colorants.

2. Colorants cationiques de formule générale

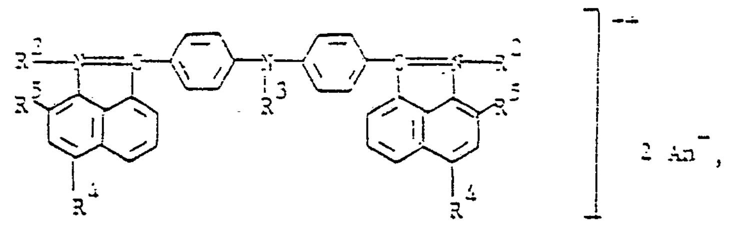

dans laquelle

$R^2$ représente l'hydrogène, un groupe alkyle en $C_1$-$C_4$ qui peut être substitué par des groupes cyano, hydroxy, alcoxy en $C_1$-$C_4$, le chlore, des groupes (alcoxy en $C_1$-$C_4$)-carbonyle, aminocarbonyle ou mono- ou di-(alkyle en $C_1$-$C_4$)-aminocarbonyle,

$R^3$ représente l'hydrogène ou un groupe alkyle en $C_1$-$C_4$ et

$R^4$ représente l'hydrogène, le chlore, le brome, un groupe (alkyle en $C_1$-$C_4$)-carbonylamino, benzoylamino, méthylsulfonylamino, phénylsulfonylamino, alkylsulfonyle en $C_1$-$C_4$, phénylsulfonyle, aminosulfonyle, mono- ou di-(alkyle en $C_1$-$C_4$)- ou -phényl-aminosulfonyle, alkylmercapto en $C_1$-$C_4$, le reste alkyle pouvant être substitué par des groupes carboxyle, (alcoxy en $C_1$-$C_4$)-carbonyle, hydroxy, méthoxy ou éthoxy ; phénylmercapto, carboxyle, cyano ou un reste de formule

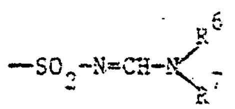

ou

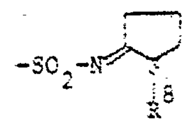

$R^5$ représente l'hydrogène, le chlore ou le brome,

$R^6$ et $R^7$ représentent des groupes alkyle en $C_1$-$C_4$, phényle, benzyle ou forment en commun et avec l'atome d'azote un noyau pyrrolidine, pipéridine ou morpholine,

$R^8$ représente l'hydrogène, un groupe alkyle en $C_1$-$C_4$, phényle ou benzyle, et

$An^-$ représente un anion, et

les restes phényle mentionnés peuvent être substitués par des groupes alkyle en $C_1$-$C_4$, le chlore, le brome, des groupes hydroxy ou alcoxy en $C_1$-$C_4$.

3. Colorants cationiques selon la revendication 2, dans lesquels

$R^2$ représente l'hydrogène, un groupe méthyle, éthyle, propyle, butyle, β-cyanéthyle, β-hydroxyéthyle, β-alcoxyéthyle, β-chloréthyle, méthoxycarbonyléthyle, éthoxycarbonyléthyle, méthoxycarbonylméthyle ou éthoxycarbonylméthyle,

$R^3$ représente l'hydrogène, un groupe méthyle ou éthyle et

$R^4$ représente l'hydrogène, le chlore, le brome, un groupe acétamino, méthylsulfonylamino, phénylsulfonylamino, alkylsulfonyle en $C_1$-$C_4$, phénylsulfonyle, aminosulfonyle, mono- ou di-(alkyle en $C_1$-$C_4$)- ou -phényle-aminosulfonyle, alkylmercapto en $C_1$-$C_4$, le reste alkyle pouvant être substitué par des groupes carboxyle, méthoxycarbonyle, éthoxycarbonyle, hydroxy, méthoxy ou éthoxy ; phénylmercapto ou cyano,

$R^5$ représente l'hydrogène,

$R^6$ et $R^7$ représentent des groupes méthyle ou phényle,

$R^8$ représente l'hydrogène ou un groupe méthyle, et

$An^-$ représente un anion, et

dans lesquels les restes phényle mentionnés peuvent être substitués par des groupes méthyle ou le chlore.

4. Colorants cationiques selon la revendication 3, dans lesquels

$R^3$ représente l'hydrogène.

5. Colorants cationiques de formule générale

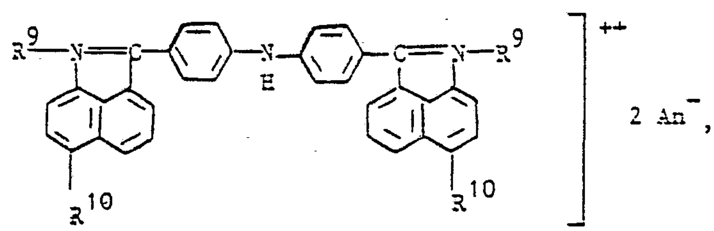

dans laquelle

$R^9$ représente un groupe méthyle, éthyle ou β-cyanéthyle et

$R^{10}$ représente l'hydrogène, le chlore ou le brome.

6. Procédé de préparation des colorants cationiques selon la revendication 1, caractérisé en ce que l'on condense au moins deux équivalents d'un composé de formule

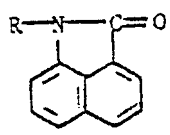

dans laquelle

R a la signification indiquée dans la revendication 1 et le noyau naphtalénique peut porter les substituants indiqués dans la revendication 1, avec un équivalent d'un composé de formule

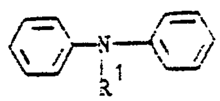

dans laquelle

$R^1$ a la signification indiquée dans la revendication 1,

les noyaux benzéniques pouvant porter les substituants indiqués dans la revendication 1, les deux positions para étant non substituées, par chauffage avec de l'oxychlorure de phosphore avec adjonction d'anhydride phosphorique à des températures supérieures à 90 °C et de préférence comprises entre 100 °C et le point d'ébullition du mélange.

7. Utilisation des colorants selon les revendications 1 à 5 pour la coloration des masses de papier, la teinture des fibres aptes à la teinture par les colorants cationiques de polymères et copolymères de l'acrylonitrile et du dicyanéthylène et des fibres de polyamides et polyesters à modification acide.